# EUROPEAN PATENT SPECIFICATION

(11) **EP 4 470 198 B1**
(45) Date of publication and mention of the grant of the patent: **24.12.2025**
(21) Application number: 22705368.3
(22) Date of filing: 27.01.2022
(51) Int. Cl.: H04L 67/52, G06F 21/44, H04L 9/32, H04L 9/40, H04W 12/06, H04W 4/40, H04W 4/029

(54) **DEVICE VERIFICATION**
GERÄTEÜBERPRÜFUNG
VERIFICATION DE DISPOSITIF

(43) Date of publication of application: 04.12.2024
(73) Proprietor: Nokia Technologies Oy, 02610 Espoo (FI)
(72) Inventor: SÖRÖS, Gábor, 1115 Budapest (HU); FARKAS, Lóránt, 2310 Szigetszentmiklós (HU)
(74) Representative: Nokia EPO representatives
(86) International application number: PCT/EP2022/051849
(87) International publication number: WO 2023/143716

(56) References cited:
- EP-A1- 2 278 833
- US-A1- 2007 027 732
- US-A1- 2011 004 921
- US-A1- 2017 286 651
- US-A1- 2018 310 171
- US-A1- 2022 027 439
- US-B1- 10 691 785

## Description

### TECHNOLOGICAL FIELD

Embodiments of the present disclosure relate to device verification. Some relate to device verification in automated agent devices.

### BACKGROUND

In some scenarios, an electronic device may request information based on the location of the electronic device. Document US10691785 discloses an authentication system which uses physical challenges for authorization.

It would be desirable to enhance the provision of location based information to an electronic device.

### BRIEF SUMMARY

According to various, but not necessarily all, embodiments there is provided an apparatus comprising
at least one processor; and
at least one memory including computer program code;
the at least one memory and the computer program code configured to, with the at least one processor, cause the apparatus to perform:
   cause to request, from at least one server, location based information based, at least in part, on a current location of a device;
   cause to transmit, to the at least one server, capability information of the device to autonomously perform at least one physical action;
   receiving at least one dynamically created physical challenge to be autonomously performed by the device, the at least one dynamically created physical challenge based, at least in part, on the capability information of the device and/or one or more capabilities of environment of the device; and
   controlling the device to autonomously perform at least one physical action based, at least in part, on the at least one dynamically created physical challenge.

In some examples, the at least one memory and computer program code further configured to, with the at least one processor, cause the apparatus to perform:
cause to transmit, to the at least one server, sensor data of the device based, at least in part on the autonomously performed at least one physical action.

In some examples, the location based information comprises information to enable the device to autonomously move around the current location of the device.

In some examples, the at least one dynamically created physical challenge comprises at least one movement, and/or at least one sound, and/or at least one haptic output, and/or at least one display output, and/or at least one sensing action to be autonomously performed by the device.

In some examples, the at least one memory and computer program code further configured to, with the at least one processor, cause the apparatus to perform:
generating, using at least one camera of the device, at least one image of the environment of the device at the current location of the device; and
cause to transmit the at least one image of the environment of the device to the at least one server prior to receiving at least one dynamically created physical challenge.

In some examples, the at least one memory and computer program code further configured to, with the at least one processor, cause the apparatus to perform:
cause to transmit appearance information of the device to the at least one server.

In some examples, the at least one memory and computer program code further configured to, with the at least one processor, cause the apparatus to perform:
receiving, upon successful completion of the at least one dynamically created physical challenge, the requested location based information.

In some examples, the at least one memory and computer program code further configured to, with the at least one processor, cause the apparatus to perform:
receiving, after successful completion of the at least one dynamically created physical challenge, one or more physical actions to be performed by the device; and
controlling the device to perform the one or more physical actions.

According to various, but not necessarily all, embodiments there is provided an electronic device comprising an apparatus as described herein, wherein the electronic device is configured to perform at least one physical action.

According to various, but not necessarily all, embodiments there is provided a method comprising:
cause to request, from at least one server, location based information based, at least in part, on a current location of a device;
cause to transmit, to the at least one server, capability information of the device to autonomously perform at least one physical action;
receiving at least one dynamically created physical challenge to be autonomously performed by the device, the at least one dynamically created physical challenge based, at least in part, on the capability information of the device and/or one or more capabilities of environment of the device;
controlling the device to autonomously perform at least one physical action based, at least in part, on the at least one dynamically created physical challenge.

In some examples, the method comprising:
cause to transmit, to the at least one server, sensor data of the device based, at least in part on the autonomously performed at least one physical action.

In some examples, the location based information comprises information to enable the device to autonomously move around the current location of the device.

In some examples, the at least one dynamically created physical challenge comprises at least one movement, and/or at least one sound, and/or at least one haptic output, and/or at least one display output, and/or at least one sensing action to be autonomously performed by the device.

In some examples, the method comprising:
cause to transmit appearance information of the device to the at least one server.

In some examples, the method comprising:
receiving, upon successful completion of the at least one dynamically created physical challenge, the requested location based information.

According to various, but not necessarily all, embodiments there is provided a computer program comprising instructions for causing an apparatus to perform:
cause to request, from at least one server, location based information based, at least in part, on a current location of a device;
cause to transmit, to the at least one server, capability information of the device to autonomously perform at least one physical action;
receiving at least one dynamically created physical challenge to be autonomously performed by the device, the at least one dynamically created physical challenge based, at least in part, on the capability information of the device and/or one or more capabilities of environment of the device;
controlling the device to autonomously perform at least one physical action based, at least in part, on the at least one dynamically created physical challenge.

In some examples, the computer program comprising instructions for causing an apparatus to perform:
cause to transmit, to the at least one server, sensor data of the device based, at least in part on the autonomously performed at least one physical action.

In some examples, the at least one dynamically created physical challenge comprises at least one movement, and/or at least one sound, and/or at least one haptic output, and/or at least one display output, and/or at least one sensing action to be autonomously performed by the device.

In some examples the computer program comprising instructions for causing an apparatus to perform:
cause to transmit of appearance information of the device to the at least one server.

In some examples, the computer program comprising instructions for causing an apparatus to perform:
receiving, upon successful completion of the at least one dynamically created physical challenge, the requested location based information.

According to various, but not necessarily all, embodiments there is provided an apparatus comprising means for performing:
cause to request, from at least one server, location based information based, at least in part, on a current location of a device;
cause to transmit, to the at least one server, capability information of the device to autonomously perform at least one physical action;
receiving at least one dynamically created physical challenge to be autonomously performed by the device, the at least one dynamically created physical challenge based, at least in part, on the capability information of the device and/or one or more capabilities of environment of the device;
controlling the device to autonomously perform at least one physical action based, at least in part, on the at least one dynamically created physical challenge.

In some examples, the means are configured to:
cause transmission, to the at least one server, of sensor data of the device based, at least in part on the autonomously performed at least one physical action.

In some examples, the at least one dynamically created physical challenge comprises at least one movement, and/or at least one sound, and/or at least one haptic output, and/or at least one display output, and/or at least one sensing action to be autonomously performed by the device.

In some examples, the means are configured to:
cause transmission of appearance information of the device to the at least one server.

In some examples, the means are configured to:
receive, upon successful completion of the at least one dynamically created physical challenge, the requested location based information.

In some examples, the means comprises
at least one processor; and
at least one memory including computer program code, the at least one memory and computer program code configured to, with the at least one processor, cause the performance of the apparatus.

According to various, but not necessarily all, embodiments there is provided an apparatus comprising
at least one processor; and
at least one memory including computer program code;
the at least one memory and the computer program code configured to, with the at least one processor, cause the apparatus to perform:
   receiving a request, from a device, for location based information, the request based, at least in part, on a current location of the device;
   receiving capability information of the device to autonomously perform at least one physical action;
   determining, based at least in part on the received capability information of the device and/or one or more capabilities of environment of the device, at least one dynamically created physical challenge to be autonomously performed by the device;
   cause to transmit the at least one dynamically created physical challenge to the device;
   receiving sensor data based, at least in part, on the at least one dynamically created physical challenge;
   determining, based at least in part on the received sensor data, if the device has successfully completed the at least one dynamically created physical challenge; and
   if it is determined that the device has successfully completed the at least one dynamically created physical challenge, cause to transmit the requested location based information to the device.

In some examples, the sensor data is received from the device and/or from one or more further devices in the environment of the device.

In some examples, the location based information comprises information to enable the device to autonomously move around the current location of the device.

In some examples, the at least one dynamically created physical challenge comprises at least one movement, and/or at least one sound, and/or at least one haptic output, and/or at least one display output, and/or at least one sensing action to be autonomously performed by the device.

In some examples, the at least one memory and computer program code further configured to, with the at least one processor, cause the apparatus to perform:
receiving, from the device, prior to determining the at least one dynamically created physical challenge at least one image of the environment of the device.

In some examples, the at least one memory and computer program code further configured to, with the at least one processor, cause the apparatus to perform:
receiving appearance information of the device, wherein determining if the device has successfully completed the at least one dynamically created physical challenge is based, at least in part, on the received appearance information of the device.

In some examples, if it is determined that the device has not successfully completed the at least one dynamically created physical challenge, denying the device access to the requested location based information.

In some examples, the at least one memory and computer program code further configured to, with the at least one processor, cause the apparatus to perform:
cause one or more further devices in the environment of the device to perform at least one physical action based, at least in part, on the at least one dynamically created physical challenge.

In some examples, the at least one memory and computer program code further configured to, with the at least one processor, cause the apparatus to perform:
determining that the device has successfully completed the at least one dynamically created physical challenge; and
subsequently cause the device to perform at least one physical action.

According to various, but not necessarily all, embodiments there is provided an electronic device comprising an apparatus as described herein and at least one transmitter and/or at least one receiver.

According to various, but not necessarily all, embodiments there is provided a method comprising:
receiving a request, from a device, for location based information, the request based, at least in part, on a current location of the device;
receiving capability information of the device to autonomously perform at least one physical action;
determining, based at least in part on the received capability information of the device and/or one or more capabilities of environment of the device, at least one dynamically created physical challenge to be autonomously performed by the device;
cause to transmit the at least one dynamically created physical challenge to the device;
receiving sensor data based, at least in part, on the at least one dynamically created physical challenge;
determining, based at least in part on the received sensor data, if the device has successfully completed the at least one dynamically created physical challenge; and
if it is determined that the device has successfully completed the at least one dynamically created physical challenge, cause to transmit the requested location based information to the device.

In some examples, the sensor data is received from the device and/or from one or more further devices in the environment of the device.

In some examles, the location based information comprises information to enable the device to autonomously move around the current location of the device.

In some examples, the at least one dynamically created physical challenge comprises at least one movement, and/or at least one sound, and/or at least one haptic output, and/or at least one display output, and/or at least one sensing action to be autonomously performed by the device.

In some examples, the method compring:
receiving appearance information of the device, wherein determining if the device has successfully completed the at least one dynamically created physical challenge is based, at least in part, on the received appearance information of the device.

In some examples, if it is determined that the device has not successfully completed the at least one dynamically created physical challenge, denying the device access to the requested information.

In some examples, the method comprising:
cause one or more further devices in the environment of the device to perform at least one physical action based, at least in part, on the at least one dynamically created physical challenge.

According to various, but not necessarily all, embodiments there is provided a computer program comprising instructions for causing an apparatus to perform:
receiving a request, from a device, for location based information, the request based, at least in part, on a current location of the device;
receiving capability information of the device to autonomously perform at least one physical action;
determining, based at least in part on the received capability information of the device and/or one or more capabilities of environment of the device, at least one dynamically created physical challenge to be autonomously performed by the device;
cause to transmit the at least one dynamically created physical challenge to the device;
receiving sensor data based, at least in part, on the at least one dynamically created physical challenge;
determining, based at least in part on the received sensor data, if the device has successfully completed the at least one dynamically created physical challenge; and
if it is determined that the device has successfully completed the at least one dynamically created physical challenge, cause to transmit the requested location based information to the device.

In some examples, the at least one dynamically created physical challenge comprises at least one movement, and/or at least one sound, and/or at least one haptic output, and/or at least one display output, and/or at least one sensing action to be autonomously performed by the device.

In some examples, the computer program comprising instructions for causing an apparatus to perform:
receiving appearance information of the device, wherein determining if the device has successfully completed the at least one dynamically created physical challenge is based, at least in part, on the received appearance information of the device.

In some examples, the computer program comprising instructions for causing an apparatus to perform:
cause one or more further devices in the environment of the device to perform at least one physical action based, at least in part, on the at least one dynamically created physical challenge.

According to various, but not necessarily all, embodiments there is provided an apparatus comprising means for performing:
receiving a request, from a device, for location based information, the request based, at least in part, on a current location of the device;
receiving capability information of the device to autonomously perform at least one physical action;
determining, based at least in part on the received capability information of the device and/or one or more capabilities of environment of the device, at least one dynamically created physical challenge to be autonomously performed by the device;
cause to transmit the at least one dynamically created physical challenge to the device;
receiving sensor data based, at least in part, on the at least one dynamically created physical challenge;
determining, based at least in part on the received sensor data, if the device has successfully completed the at least one dynamically created physical challenge; and
if it is determined that the device has successfully completed the at least one dynamically created physical challenge, cause to transmit the requested location based information to the device.

In some examples, the at least one dynamically created physical challenge comprises at least one movement, and/or at least one sound, and/or at least one haptic output, and/or at least one display output, and/or at least one sensing action to be autonomously performed by the device.

In some examples, the means are further configured to:
receive appearance information of the device, wherein determining if the device has successfully completed the at least one dynamically created physical challenge is based, at least in part, on the received appearance information of the device.

In some examples, the means are configured to perform:
cause one or more further devices in the environment of the device to perform at least one physical action based, at least in part, on the at least one dynamically created physical challenge.

In some examples, the means comprises
at least one processor; and
at least one memory including computer program code, the at least one memory and computer program code configured to, with the at least one processor, cause the performance of the apparatus.

According to various, but not necessarily all, embodiments there is provided an apparatus comprising
at least one processor; and
at least one memory including computer program code;
the at least one memory and the computer program code configured to, with the at least one processor, cause the apparatus to perform:
   cause to request, from at least one server, location based information based, at least in part, on a current location of a device;
   cause to transmit, to the at least one server, capability information of the device to perform at least one physical action;
   receiving at least one dynamically created physical challenge to be performed by the device, the at least one dynamically created physical challenge based, at least in part, on the capability information of the device and/or one or more capabilities of environment of the device; and
   controlling the device to perform at least one physical action based, at least in part, on the at least one dynamically created physical challenge.

According to various, but not necessarily all, embodiments there is provided an apparatus comprising
at least one processor; and
at least one memory including computer program code;
the at least one memory and the computer program code configured to, with the at least on processor, cause the apparatus at least to perform at least a part of one or more methods disclosed herein.

According to various, but not necessarily all, embodiments there is provided an apparatus comprising means for performing at least part of one or more methods disclosed herein.

According to various, but not necessarily all, embodiments there is provided examples as claimed in the appended claims.

The description of a function should additionally be considered to also disclose any means suitable for performing that function.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3 shows another example of the subject matter described herein;
FIG. 4 shows another example of the subject matter described herein;
FIG. 5A shows another example of the subject matter described herein; and
FIG. 5B shows another example of the subject matter described herein.

### DETAILED DESCRIPTION

Examples of the disclosure relate to apparatus, methods and/or computer programs for and/or involved in device verification.

Some examples of the disclosure relate to verifying a location of an electronic device.

The following description and FIGs describe various examples of an apparatus 10 comprising means for:
cause to request, from at least one server 12, location based information 14 based, at least in part, on a current location 16 of a device 18;
cause to transmit, to the at least one server 12, capability information 20 of the device 18 to autonomously perform at least one physical action;
receiving at least one dynamically created physical challenge 22 based, at least in part, on the capability information 20 of the device 18 and/or one or more capabilities of environment 24 of the device 18; and
controlling the device 18 to autonomously perform at least one physical action based, at least in part, on the at least one dynamically created physical challenge 22.

In examples, the means comprises at least one processor and at least one memory including computer program code.

The following description and FIGs describe various examples of an apparatus 10 comprising means for:
receiving a request, from a device 18, for location based information 14, the request based, at least in part, on a current location 16 of the device 18;
receiving capability information 20 of the device 18 to autonomously perform at least one physical action;
determining, based at least in part on the received capability information 20 of the device 18 and/or one or more capabilities of environment 24 of the device 18, at least one dynamically created physical challenge 22 to be autonomously performed by the device 18;
cause to transmit the at least one dynamically created physical challenge 22 to the device 18; receiving sensor data 28 based, at least in part, on the at least one dynamically created physical challenge 22;
determining, based at least in part on the received sensor data 28, if the device 18 has successfully completed the at least one dynamically created physical challenge 22; and
if it is determined that the device has successfully completed the at least one dynamically created physical challenge 22, cause to transmit the requested location based information 14 to the device 18.

In examples, the means comprises at least one processor and at least one memory including computer program code.

As used herein, cause to perform an action should also be considered to disclose causing performance of the action and vice versa. For example, cause to transmit information should also be considered to disclose causing transmission of the information.

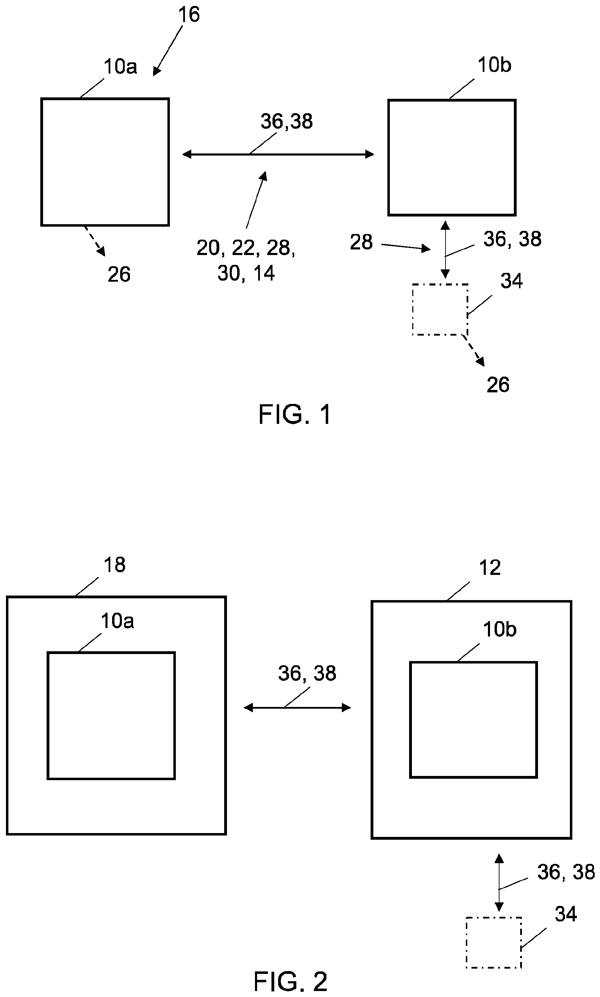

FIG. 1 schematically illustrates an example of an apparatus 10a and an apparatus 10b. Apparatus 10a can be considered a first apparatus 10a and apparatus 10b can be considered a second apparatus 10b.

In examples, the first apparatus 10a is configured to control operation of a device 18, which can be considered an electronic device 18. See, for example, FIG. 2.

In examples, the second apparatus 10b is configured to control operation of at least one server 12. See, for example, FIG. 2.

The first and second apparatus 10a, 10b are configured to control transmission/receiving of one or more signals 38 comprising information 36 between a device 18 and at least one server 12.

In some examples, the first apparatus 10a is configured to cause requesting, from at least one server 12, of location based information 14 based, at least in part, on a current location 16 of a device 18.

In examples, the current location 16 of the device 18, as determined/transmitted by the device 18, can be considered a reported current location 16 of the device 18 as the location of the device 18 has not been verified by the at least one server 12 at this point.

As used herein, when one or more actions of causing transmission/transmitting are disclosed and/or discussed it should be considered that the corresponding causing receiving/receiving actions are also disclosed and/or discussed.

Similarly, for any receiving/causing receiving feature(s)/action(s), it should be considered that the corresponding transmitting/causing transmission feature(s)/action(s) are also disclosed and/or discussed.

As used herein, any causing action feature should also be considered to disclose the corresponding action and vice versa. For example, receiving should also be considered to disclose causing receiving and causing receiving should also be considered to disclose receiving.

In examples, causing an action to be performed can be considered controlling performance of that action.

For example, in the example of FIG. 1, where the first apparatus 10a is configured to cause requesting, the second apparatus 10b is correspondingly configured to receive a request, from a device 18, for location based information 14, the request based, at least in part, on a current location 16 of the device 18.

In examples, the location based information 14 comprises information to enable the device 18 to autonomously move around the current location 16 of the device 18.

In some examples, the first apparatus 10a is configured to cause transmission, to the at least one server 12, of capability information 20 of the device 18 to autonomously perform at least one physical action.

In examples, the first apparatus 10a is configured to cause transmission, to the at least one server 12, of capability information 20 of the device 18 to perform at least one physical action.

Similarly, the second apparatus 10b can be considered to be configured to receive the capability information 20 from the device 18.

In examples, the second apparatus 10b is configured to determine, based at least in part on the received capability information 20 of the device 18 and/or one or more capabilities of the environment 24 of the device 18, at least one dynamically created physical challenge 22 to be autonomously performed by the device 18.

In examples, the second apparatus 10b is configured to determine, based at least in part on the received capability information 20 of the device 18 and/or one or more capabilities of environment 24 of the device 18, at least one dynamically created physical challenge 22 to be performed by the device 18.

As used herein, the term "determining" (and grammatical variants thereof) can include, at least: calculating, computing, processing, deriving, investigating, looking up (for example, looking up in a table, a database or another data structure), ascertaining and the like. Also, "determining" can include receiving (for example, receiving information), accessing (for example, accessing data in a memory) and the like. Also, "determining" can include resolving, selecting, choosing, establishing, and the like.

In some examples, the at least one dynamically created physical challenge comprises at least one movement, and/or at least one sound, and/or at least one haptic output, and/or at least one display output, and/or at least one sensing action to be autonomously performed by the device 18.

In examples, the second apparatus 10b is configured to cause transmission of signals 38 comprising information 36 to one or more further devices 34 and/or to receive one or more signals 38 comprising information 36 from one or more further devices 34.

In some examples, the second apparatus 10b is configured to control one or more further devices 34.

In examples, the second apparatus 10b is configured to cause transmission of the at least one dynamically created physical challenge 22 to the device 18. Consequently, the first apparatus 10a is, in some examples, configured to receive the dynamically created physical challenge 22.

In some examples, the second apparatus 10b is configured to cause one or more further devices 34 in the environment 24 of the device 18 to perform at least one physical action 26 based, at least in part, on the at least one dynamically created physical challenge 22.

In examples, the first apparatus 10b is configured to control the device 18 to autonomously perform at least one physical action 26 based, at least in part, on the at least one dynamically created physical challenge 22.

In examples, the first apparatus 10b is configured to control the device 18 to perform at least one physical action 26 based, at least in part, on the at least one dynamically created physical challenge 22.

In some examples, the second apparatus 10b is configured to receive sensor data 28 based, at least in part, on the at least one dynamically created physical challenge 22.

The sensor data 28 can be received from the device 18 and/or from one or more further devices 34 in the environment 24 of the device 18.

Accordingly, in examples, the first apparatus 10a is configured to cause transmission, to the at least one server 12, of sensor data 28 of the device 18 based, at least in part on the autonomously performed at least one physical action 26.

In some examples, the second apparatus 10b is configured to determine, based at least in part on the received sensor data 28, if the device 18 has successfully completed the at least one dynamically created physical challenge 22.

In examples, the second apparatus 10b is configured to receive appearance information 30 of the device 18 and to determine if the device 18 has successfully completed the at least one dynamically created physical challenge based, at least in part, on the received appearance information 30 of the device 18.

In some examples, the first apparatus 10a is configured to cause transmission of appearance information 30 of the device 18 to the at least one server 12.

In examples, the second apparatus 10b is configured, if it is determined that the device 18 has successfully completed the at least one dynamically created physical challenge 22, to cause transmission of the requested location based information 14 to the device 18.

Accordingly, the first apparatus 10a is, in some examples, configured to receive, upon successful completion of the at least on dynamically created physical challenge 22, the requested location based information 14.

In examples, the second apparatus 10b is configured, if it is determined that the device 18 has not successfully completed the at least one dynamically created physical challenge 22, to deny the device 18 access to the requested location based information 14.

In some examples, the first apparatus 10a is configured to generate, using at least one camera of the device 18, at least one image of the environment 24 of the device 18 at the current location 16 of the device 18, and to cause transmission of the at least one image of the environment 24 of the device 18 to the at least one server 12 prior to receiving the at least one dynamically created physical challenge 22.

Accordingly, in examples, the second apparatus 10b is configured to receive, from the device, prior to determining the at least one dynamically created physical challenge 22 at least one image of the environment 24 of the device 18.

In some examples, the second apparatus 10b is configured to determine that the device 18 has successfully completed the at least one dynamically created physical challenge 22 and to subsequently cause the device 18 to perform at least one physical action 26.

Accordingly, in examples, the first apparatus 10a is configured to receive, after successful completion of the at least one dynamically created physical challenge 22, one or more physical actions 26 to be performed by the device 18 and to control the device 18 to perform the one or more physical actions 26.

FIG. 2 schematically illustrates an example of a device 18 and at least one server 12. In examples the device 18 can be considered an electronic device and/or an apparatus.

In examples, the at least one server 12 can be considered an electronic device and/or an apparatus.

The device 18 in the example of FIG. 2 comprises an apparatus 10a. The apparatus 10a can be a first apparatus 10a as described in relation to FIG. 1 and/or an apparatus as described herein.

The at least one server 12 in the example of FIG. 2 comprises an apparatus 10b. The apparatus 10b can be a second apparatus 10b as described in relation to FIG. 1 and/or an apparatus as described herein.

In the example of FIG. 2, the device 18 and at least one server 12 are configured to communicate using signals 38 comprising information 36.

In the example of FIG. 2, the at least one server 12 is configured to communicate with one or more further devices 34 using signals 38 comprising information 36.

In the example of FIG. 2 the device 18 is configured to perform at least one physical action 26. Accordingly, FIG. 2 illustrates an electronic device 18 comprising an apparatus 10 as described herein, wherein the electronic device 18 is configured to perform at least one physical action 26.

In examples, the at least one server 12 comprises at least one transmitter and/or at least one receiver. Accordingly, in examples, FIG. 2 illustrates an electronic device comprising at least one transmitter and/or at least one receiver.

In examples, the device 18 and/or at least one server 12 of FIG. 2, can comprise any number of additional elements not illustrated.

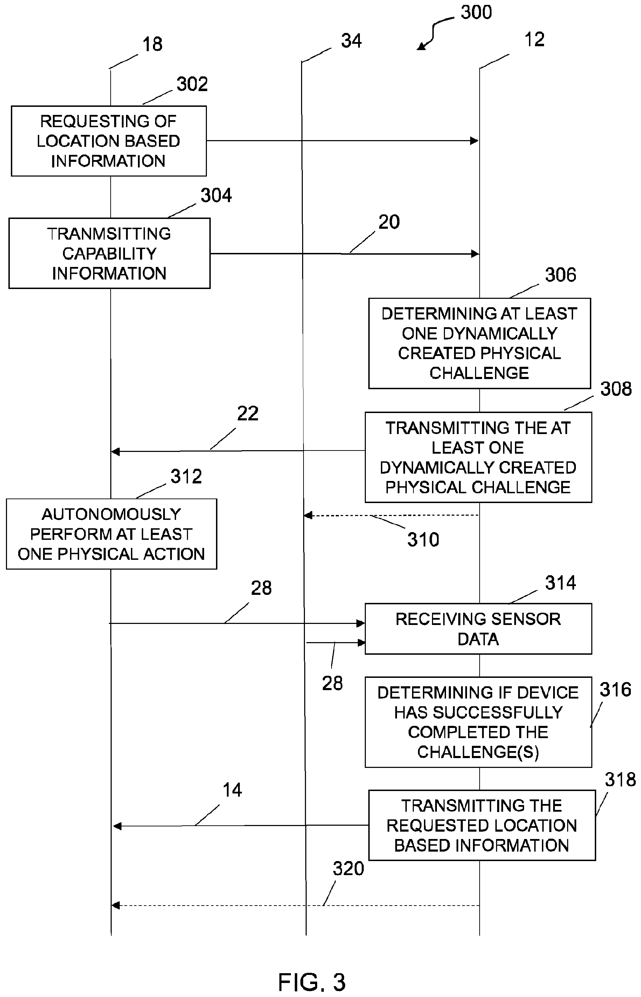

FIG. 3 illustrates an example of a method 300.

One or more features discussed in relation to FIG. 3 can be found in one or more of the other figures.

FIG. 3 can be considered to illustrate a plurality of methods. For example, FIG. 3 illustrates one or more actions at a plurality of actors/entities. In examples, FIG. 3 can be considered to illustrate a plurality of methods performed by the individual actors/entities.

In the example of FIG. 3, a plurality of apparatuses transmit and/or receive one or more signals 38 comprising information 36. The information 36 can be transmitted/received in any suitable way, for example using one or more messages, however, any suitable form of communication in any suitable network can be used.

In examples, communications and/or transmissions between elements illustrated in FIG. 3 can proceed via any number of intervening elements, including no intervening elements. For example, communications and/or transmissions between elements illustrated in FIG. 3 can be transmitted using and/or via any suitable network or networks

In the illustrated example, a device 18, which can be considered an electronic device 18, and at least one server 12, which can be considered an electronic device, transmit and/or receive one or more signals and/or one or more messages and so on.

In examples, the device 18 can be any suitable device 18. For example, device 18 can be any suitable device 18 that is configured to autonomously perform one or more physical actions.

Additionally, or alternatively, the device 18 can be any suitable device 18 that may require location based information 16 based, at least in part, on a current location 16 of the device 18.

In examples the device 18 can comprise an agent, a robot, a drone, a self driving vehicle, a smartphone, a computing device, a rover, a robotic arm, a forklift, a crane a grapple, a harvester, a surgical robot, a nanobot, and/or an augmented reality device and so on.

In examples, the device 18 can comprise any suitable sensor or sensors. For example, the device 18 can comprise any suitable sensor(s) for detecting one or more physical actions 26 performed by further device(s) 34, such as one or more microphones. In examples, the device 18 comprises any suitable scanning sensor(s) such as light detection and ranging sensor(s) (LIDAR). In examples, a camera can be considered a sensor.

Also represented in the example of FIG. 3 is at least one further device 34.

In examples, the at least one further device 34 can comprise any suitable further device(s) 34 comprising one or more sensors for determining autonomous action(s) of the device 18.

In some examples, the at least one further device 34 can comprise any suitable sensor(s) for detecting one or more physical actions 26 performed by the device 18, such as one or more microphones. In examples, the further device(s) 34 comprises any suitable scanning sensor(s) such as light detection and ranging sensor(s) (LIDAR). In examples, a camera can be considered a sensor.

Additionally, or alternatively, the at least one further device 34 can comprise any suitable further device 34 that is configured to autonomously perform one or more physical actions.

For example, the at least one further device 34 can comprise an agent, a robot, a drone, a self driving vehicle, a smartphone, a computing device, a rover, a robotic arm, a forklift, a crane a grapple, a harvester, a surgical robot, a nanobot, an augmented reality device, a camera, and/or a sensor and so on.

The at least one further device 34 can be considered trusted device(s) associated with/known by the at least one server 12. For example, the at least one further device 34 can previously have been verified to be at the location 16/in the environment 24 of the location 16.

In some examples, the at least one server 12 and the at least one further device 34 can be considered to form at least part of a smart environment.

In examples, the environment 24 of and/or around a location 16 can be considered to be the volume around the location that is observable and/or detectable by a device 18 and/or through which the device 18 can autonomously move.

In some examples, the environment 24 of and/or around a location 16 can be considered to be the volume around the location from which further devices 34 can observe and/or detect a device 18.

In examples, the environment 24 of the device 18 can affect and/or constrain the one or more physical actions 26 that can be performed by the device 18. For example, if the environment 24 of the device 18 is a straight corridor, the device 18 cannot execute motion in a circle that would require more space than is available in the straight corridor.

In the example of FIG. 3 the method 300 is described in relation to actions performed by the device 18 and/or at least one server 12 and/or at least one further device 34. However, FIG. 3 should also be considered to disclose causing the various actions performed. For example, requesting, from at least one server 12, location based information 14 should also be considered to disclose causing requesting, from at least one server 12, of location based information 16 and so on.

In examples, method 300 and/or at least part of method 300 can be considered a method of device verification.

In examples, method 300 and/or at least part of method 300 can be considered a method of device location verification.

In examples, method 300 and/or at least part of method 300 can be considered a method of enhancing security of location based information.

In examples, method 300 and/or at least part of method 300 can be considered a visual authentication method.

In examples, the method 300 and/or at least part of the method 300 can be considered an authorization method.

In examples, at least part of the method 300 can be performed by any suitable apparatus comprising any suitable means for performing at least part of the method 300.

In examples, at least part of method 300 can be performed by the first apparatus 10a and/or the second apparatus 10b of FIG. 1.

In examples, at least part of method 300 can be performed by the device 18 and/or the at least one server 12 of FIG. 2.

In the example of FIG. 3 the location of the block is intended to indicate the apparatus/device(s) performing the action(s) indicated by the block. For example, block 302 is indicated as being performed at and/or by the device 18, from a transmission point of view, and at and/or by the at least one server 12 from a receiving point of view.

At block 302, method 300 comprises requesting, from at least one server 12, location based information 14 based, at least in part, on a current location 16 of a device 18.

Accordingly, block 302, in some examples, should be considered to comprise cause to request, from at least one server 12, location based information 14 based, at least in part, on a current location 16 of a device 18.

Requesting/cause to request, from at least one server 12, location based information 14 based, at least in part, on a current location 16 of a device 18 can be performed in any suitable way using any suitable method.

For example, block 302 can comprise cause to transmit/transmitting one or more signals 38 comprising information 36 to the at least one server 12. In examples, block 302 comprises cause to transmit/transmitting a request for location based information 16 to at least one server 12 based, at least in part, on a current location of a device 18.

FIG. 3 also illustrates the corresponding cause to receive/receiving feature and therefore can be considered to comprise, from the point of view of the at least one server 12, receiving a request, from a device 18, for location based information 14, the request based, at least in part, on a current location 16 of the device 18.

Location based information 14 can comprise any suitable information relevant to and/or pertinent to and/or associated with a current location 16 of the device 18.

In examples, the location based information 14 can comprise static and/or dynamic information.

Static information can be considered information that is generally unchanging in nature, such as, for example, a layout of corridors and/or roads in an environment 24.

Dynamic information can be considered information that is generally changeable in nature, such as, for example, noise level of an environment 24.

In some examples, location based information 14 can comprise any suitable information to allow the device 18 to perform and/or to autonomously perform one or more functions at and/or in the environment 24 of the current location 16 of the device 18.

In some examples, location based information 14 can comprise any suitable information for accessing one or more spatial computing services based, at least in part, on the current location 16 of the device 18.

In some examples, the location based information 14 comprises information to enable the device 18 to autonomously move around the current location 16 of the device 18. For example, the location based information 14 can comprise map information of the current location 16 of the device 18, such as a simultaneous localization and mapping (SLAM) map.

For example, the location based information 14 can comprise information to enable an autonomous agent, such as a robot, to move around a location 16, such as a factory, to allow the autonomous agent to perform one or more tasks.

In some examples, the location based information 14 comprises information to allow a device 18 to display and/or access one or more virtual objects associated with the environment 24 around the current location 16 of the device 18. For example, the location information 16 can comprise one or more augmented reality objects.

In some examples, the location based information 14 comprises dynamic information about the environment 24 of the device 18. For examples, the location based information 14 can comprise information of the position and velocity of people or further device(s) 34, such as robot(s), in the environment 24, and/or information such humidity and temperature level, air pressure, noise level and so on.

In some examples, the location based information 14 comprises information, such as maps, of safe velocity in various parts of the environment 24 and/or recommended velocity at the current location 16 of the device 18.

In some examples, the location based information 14 comprises information about sensors, actuators, and/or other devices 34, such as other agents, in the environment 24. For example, the location based information 14 can comprise information about names and/or IP addresses of other devices 34 in the environment 24. This can, for example, allow a device 18 newly added to an environment 24 to connect to the devices 34 already present in the environment 24.

The current location 16 of the device 18 can be determined in any suitable way using any suitable method. In examples, the device 18 can determine its current location and transmit the current location 16 to the at least one server 12. In some examples, the at least one server 12 can determine the location 16 from information provided by the device 18

At this point, the current location 16 of the device 18 provided by the device 18 can be considered a reported location as it has not yet been determined that the device 18 is actually at the location 16.

In examples, the current location 16 of the device 18 can be provided to and/or determined by the at least one server 12 at any suitable time in method 300.

For example, the current location 16 of the device 18 can be provided to and/or determined by the at least one server at block 302.

For example, the current location 16 of the device 18 can be provided to and/or determined by the at least one server 12 at block 304.

For example, the current location 16 of the device 18 can be provided to and/or determined by the at least one server 12 between block 302 and 304.

For example, the current location 16 of the device 18 can be provided after block 304.

At block 304, method 300 comprises transmitting, to the at least one server 12, capability information 20 of the device 18 to autonomously perform at least one physical action.

Accordingly, from the point of view of the at least one server 12, block 304 comprises receiving capability information 20 of the device 18 to autonomously perform at least one physical action.

In some examples, block 304 comprises transmitting, to the at least one server 12, capability information 20 of the device 18 to perform at least one physical action.

In some examples, a physical challenge can be considered and/or can comprise one or more physical actions 26.

Block 304 can therefore be considered to comprise transmitting, to the at least one server 12, capability information 20 of the device 18 to autonomously perform one or more physical challenges.

In examples, a physical action 26 can be considered an action that when performed produces at least one output that can be physically observed and/or detected at a location, and/or detecting/observing a physical action at a location.

In examples, a physical action 26 can be considered performing an action that is observable and/or detectable at a location, and/or observing and/or detecting an action at a location.

In examples a physical action 26 comprises movement, and/or sound, and/or haptic output, and/or display output, and/or sensing and so on.

In some examples, a physical action 26 can comprise a change in the aspect of the device 18 such as the shape of the device 18, the colour of the device 18, the opacity of the device 18, the reflectivity of the device 18, the count of the device, for example with regard to a self-assembled robot that can temporarily self-disassemble itself or certain parts of itself, the displayed mood of the device 18, and/or or a gesture produced by a humanoid like frowning, winking, waving and so on.

Autonomously performing one or more physical challenges and/or physical actions 26 can be considered performing one or more physical challenges and/or physical actions 26 without user input and/or without user intervention.

For example, a device 18 autonomously performing one or more movements can be considered the device 18 performing the one or more movements without input/intervention of a user.

Capability information 20 of the device 18 to autonomously perform at least one physical action can comprise any suitable information.

In some examples, the capability information 20 comprises information of the hardware and/or software capability/setup of the device 18.

In some examples, the capability information 20 comprises information of the set of sensors and/or actuators available to/controllable by the device 18.

In some examples, the capability information 20 comprises information of the capability of the device 18 to autonomously perform movement, and/or produce sound, and/or to provide haptic output, and/or to provide display output, and/or to perform sensing and so on.

In examples, the at least one server 12 can also receive/have capability information of the environment 24 of the device 18. For example, the at least one server 12 can have/receive capability information of at least one further device 34 to autonomously perform and/or observe and/or detect at least one physical action 26.

In examples, the at least one server 12 therefore can have knowledge of one or more capabilities of the environment 24 of the device 18.

In some examples, the at least one server 12 requests the capability information 20 of the device 18 from the device 18.

In some examples, the at least one server 12 is configured to always request the capability information 20 from the device 18.

In some examples, the at least one server 12 is configured to request the capability information 20 if the device 18 does not automatically provide the capability information 20.

In some examples, the at least one server 12 is configured to request the capability information 20 during certain time periods, for example, between 9-10 AM.

In some examples, the at least one server 12 is configured to request the capability information 20 when the number of concurrent requests from device 18 exceeds a limit.

At block 306, method 300 comprises determining, based at least in part on the received capability information 20 of the device 18 and/or one or more capabilities of environment 24 of the device 18, at least one dynamically created physical challenge 22 to be autonomously performed by the device 18.

In some examples, block 306, comprises determining, based at least in part on the received capability information 20 of the device 18 and/or one or more capabilities of environment 24 of the device 18, at least one dynamically created physical challenge 22 to be performed by the device 18.

Determining, based at least in part on the received capability information 20 of the device 18 and/or one or more capabilities of environment 24 of the device 18, at least one dynamically created physical challenge 22 to be autonomously performed by the device 18 can be performed in any suitable way using any suitable method.

In some examples, at least one dynamically created physical challenge 22 can be considered at least one physical challenge 22 that is determined/created as needed.

In some examples, at least one dynamically created physical challenge 22 can be considered at least one physical challenge 22 that is not predetermined prior to receipt of the request for location based information 14.

In some examples, at least one dynamically created physical challenge 22 can be considered at least one physical challenge 22 that is determined/created following/subsequent to receipt of the request for the location based information 16.

In some examples, at least one dynamically created physical challenge 22 can be considered at least one physical challenge 22 that is determined such that the device 18 requesting the location based information 14 and/or a user of the device 18 can have no prior knowledge of the physical challenge(s) 22 that will be determined.

The at least one dynamically created physical challenge 22 can have any suitable form. For example, the at least one dynamically created physical challenge 22 can have any suitable form to challenge and/or cause the device 18 to perform one or more physical actions 26 to prove that the device 18 is actually at the reported current location 16 of the device 18.

In some examples, a physical challenge 22 can comprise one or more physical actions 26 to be performed by the device 18.

In some examples, the at least one dynamically created physical challenge 22 comprises at least one movement, and/or at least one sound, and/or at least one haptic output, and/or at least one display output, and/or at least one sensing action to be autonomously performed by the device 18.

In the example of FIG. 3, the at least one dynamically created physical challenge 22 is determined based, at least in part, on the received capability information 20 of the device 18 and/or one or more capabilities of the environment 24 of the device 18.

This means that the at least one dynamically created physical challenge 22 can be determined such that the at least one dynamically created physical challenge 22 comprises actions that the device 18 and/or the environment 24 of the device 18, for example at least one further device 34, are capable and/or configured to perform.

Accordingly, this can prevent the at least one server 12 from determining physical challenge(s) 22 that the device 18 and/or environment 24 of the device 18 cannot perform meaning that the device 18, in such circumstances, would fail such challenge(s).

For example, if the capability information 18 of the device indicates that the device 18 has a display and can produce sound but cannot autonomously move, the at least one dynamically created physical challenge 22 can include use of the display and sound but not of autonomous movement.

For example, it the capability information of the environment 24 of the device 18, for example the at least one further device 34, indicates that there is at least one camera in the environment 24 of the device 18, the at least one dynamically created physical challenge can include actions to be performed by the device 18 and observed by the further device(s) 34 in the environment of the device 18.

In examples, the at least one dynamically created physical challenge 22 can be considered to be adapted to, and/or tailored to, and/or configured for one or more capabilities of the device 18 and/or environment 24 of the device 18.

At block 308, method 300 comprises transmitting the at least one dynamically created physical challenge to the device 18.

Accordingly, from the point of view of the device 18, block 308 comprises receiving at least one dynamically created physical challenge 22 to be autonomously performed by the device 18, the at least one dynamically created physical challenge 22 based, at least in part, on the capability information of the device 18 and/or one or more capabilities of environment 24 of the device 18.

Transmitting the at least one dynamically created physical challenge to the device 18 can be performed in any suitable way using any suitable method.

In some examples, method 300 comprises causing/controlling one or more further device 34 in the environment 24 of the device 18 to perform at least one physical action 26. For example, cause one or more further device 34 in the environment 24 of the device 18 to observe and/or detect one or more actions performed by the device 18, and/or to perform one or more actions to be observed and/or detected by the device 18.

In examples, the at least one server 12 transmits one or more signals 38 comprising information 36 to one or more further devices 34 to cause the one or more further devices 34 to perform at least one physical action.

This is illustrated at block 310 of the example of FIG. 3.

In examples, the one or more further devices 34 are devices known to be physically located at the location 16 of the device 18. Accordingly, if the one or more further device 34 observe the device 18 performing one or more expected, dynamically created physical actions 26 and/or are observed by the device 18 performing one or more expected, dynamically created physical actions 26 it can be determined that the device 18 is actually at the reported location 16.

At block 312, method 300 comprises autonomously performing at least one physical action 26 based, at least in part, on the at least one dynamically created physical challenge 22.

Block 312 should also be considered to comprise causing/controlling the device to autonomously perform at least one physical action 26 based, at least in part, on the at least one dynamically created physical challenge 22.

Consequently, FIG. 3 illustrates a method 300 comprising:
cause to request, from at least one server 12, location based information 14 based, at least in part, on a current location 16 of a device 18;
cause to transmit, to the at least one server 12, capability information 20 of the device 18 to autonomously perform at least one physical action;
receiving at least one dynamically created physical challenge 22 to be autonomously performed by the device 18, the at least one dynamically created physical challenge 22 based, at least in part, on the capability information of the device 18 and/or one or more capabilities of environment 24 of the device 18; and
controlling the device 18 to autonomously perform at least one physical action 26 based, at least in part, on the at least one dynamically created physical challenge 22.

In some examples, block 312, comprises performing at least one physical action 26 based, at least in part, on the at least one dynamically created physical challenge 22.

Autonomously performing at least one physical action 26 based, at least in part, on the at least one dynamically created physical challenge 22 can be performed in any suitable way using any suitable method.

In examples, block 312 comprises autonomously performing at least one physical action 26 indicated by the at least one dynamically created physical challenge 22.

In some examples, block 312 comprises autonomously performing at least one physical action 26 to allow a determination to be made as to whether the device 18 is actually physically at the reported current location 16.

In some examples, block 312 comprises autonomously observing and/or detecting at least one physical action 26 performed by one or more further devices 34 to allow a determination to be made as to whether the device 18 is actually physically at the reported current location 16.

In some examples, block 312 comprises autonomously performing at least one movement, and/or at least one sound, and/or at least one haptic output, and/or at least one display output, and/or at least one sensing action.

For example, the device 18 can perform one or more movements indicated in the at least one dynamically created physical challenge 22, such as lateral, forward, backward, turning, tilting movements, and/or one or more image zooming actions to be observed and/or detected by one or more further devices 34 in the environment 24 of the device 18.

Additionally, or alternatively, the device 18 can determine sensor data 28 during performance of the one or more movements. For example, the device 18 can determine image data from one or more cameras of the device 18 during performance of the one or more movements.

Image data can comprise static image(s), video data, sensed environment geometry such as LIDAR or SLAM point cloud, and/or three dimensional image data.

For example, the device 18 can perform at least one sound, at least one haptic output, and/or at least one display output to be observed and/or detected by one or more further devices 34 in the environment 24 of the device 18.

For example, the device 18 can perform a requested pattern of flashing lights and/or display outputs, and/or sounds to be observed and/or detected by one or more further devices 34 in the environment 24 of the device 18.

For example, the device 18 can display one or more requested images to be observed and/or detected by one or more further devices 34 in the environment 24 of the device 18. For example, the device 18 can autonomously move to a camera in the environment 24 and display a requested visual code, such as a QR code, to the camera.

For example, the device 18 can move to a microphone in the environment 24 and produce a requested sound.

For example, the device 18 can assume a requested pose and/or posture to be observed and/or detected by one or more further devices 34 in the environment of the device 18.

For example, the device 18 can observe and/or detect one or more physical actions 26 performed by one or more further devices 34 in the environment 24 of the device 18.

For example, the at least one server 18 can cause and/or control at least one further device 34 in the environment 24 of the device 18 to perform a sequence of movements, and/or sounds, and/or lights, and/or haptic outputs to be observed and/or detected by the device 18.

At block 314, method 300 comprises receiving sensor data 28 based, at least in part, on the at least one dynamically created physical challenge 22.

In examples, block 314 comprises receiving sensor data 28 indicative of one or more physical actions 26 performed by the device 18 based, at least in part, on the at least one dynamically created physical challenge 22.

In examples, any suitable sensor data 28 can be received in any suitable form from any suitable source.

For example, any suitable sensor data 28 configured to allow a determination as to whether the device 18 successfully completed that at least one dynamically created physical challenge 22 at the reported current location 16 of the device 18 can be received.

In examples, sensor data 28 comprises data from one or more cameras, and/or one or more microphones, and/or touch sensitive inputs and so on.

In some examples, the sensor data 28 is received from the device 18 and/or from one or more further devices 34 in the environment 24 of the device 18.

The sensor data 28 can be data obtained from one or more sensors of the device 18 and/or the one or more further devices 34 during performance of the at least one physical action 26 by the device 18.

Accordingly, from the point of view of the device 18, block 314 can comprise transmitting, to the at least one server 12, of sensor data 28 of the device 18, based at least in part on the autonomously performed at least one physical action 26.

At block 316, method 300 comprises determining, based at least in part on the received sensor data 28, if the device 18 has successfully completed the at least one dynamically created physical challenge 22.

Determining, based at least in part on the received sensor data 28, if the device 18 has successfully completed the at least one dynamically created physical challenge 22 can be performed in any suitable way using any suitable method.

In examples, block 316 comprises determining if the sensor data 28 indicates and/or shows and/or confirms that the device 18 autonomously performed, at the reported current location 16 of the device 18, at least one expected physical action 26 indicated in the at least one dynamically created physical challenge 22.

In some examples, block 316 comprises determining if device 18 autonomously performed at least one expected movement, and/or sound, and/or haptic output, and/or display output, and/or sensing action at the reported current location 16 of the device 18.

In some examples, block 316 can be considered to comprise determining, based at least in part on the received sensor data 28, if the device 18 is actually at the reported current location 16 of the device 18.

For example, at block 316 it can be determined from image data and/or description from one or more further devices 34, known/confirmed to be in the environment 24 of the location 16, if the device 18 successfully performed one or more movements indicated in the at least one dynamically created physical challenge 22.

Additionally, or alternatively, in examples the at least one server 12 can have relevant and/or up to date image information of the location 16, for example from one or more further devices 34 known to be in the environment 24 of the location 16, and can, at block 316, determine if image data from one or more cameras of the device 18 obtained during performance of the one or more movements shows, for example, expected movement of one or more objects known to be currently in the environment 24 of the location 16 during such movements.

For example, it can be determined from the sensor data 28 from one or more further devices 34, known/confirmed to be in the environment 24 of the location 16, if the device 18 successfully performed at least one sound, at least one haptic output, and/or at least one display output indicated in the at least one dynamically created physical challenge 22.

For example, it can be determined from the sensor data 28 from one or more further device 34, know/confirmed to be in the environment 24 of the location 16, if the device 18 successfully performed a pattern of flashing lights and/or display outputs and/or sounds indicated in that at least one dynamically created physical challenge 22.

For example, it can be determined from image data from one or more further devices 34, known/confirmed to be in the environment 24 of the location 16, if the device 18 successfully displayed one or more requested images to be observed and/or detected by one or more further devices 34.

For example, it can be determined from image data from one or more further devices 34, known/confirmed to be in the environment 24 of the location 16, if the device 18 successfully assumed a requested pose and/or posture to be observed and/or detected by one or more further devices 34.

For example, it can be determined from image data of the device 18 if the device 18 has successfully observed and/or detected one or more physical actions 26 performed by one or more further devices 34 known/confirmed to be in the environment 24 of the location 16.

For example, it can be determined from image data of the device 18 if the device 18 has successfully observed/detected an expected sequence of movements performed by one or more devices 34 known/confirmed to be in the environment 24 of the location 16.

For example, It can be determined from image data of the device 18 if the device 18 has successfully observed/detected an expected change in the aspect of at least one further device 34 known/confirmed to be in the environment 24 of the location 16, such as an expected change in the shape of a further device 34, the colour of the further device 34, the opacity of the further device 34, the reflectivity of the further device 34, the count of the further device 34, the displayed mood of the further device 34, and/or or a gesture produced by a humanoid like frowning, winking, waving and so on.

For example, It can be determined from image data of the device 18 if the device 18 has successfully observed/detected an expected visual code displayed by at least one further device 34 known/confirmed to be in the environment 24 of the location 16.

At block 318, method 300 comprises if it is determined that the device 18 has successfully completed the at least one dynamically created physical challenge 22, transmitting the requested location based information 14 to the device 18.

Consequently, FIG. 3 illustrates a method 300 comprising:
receiving a request, from a device 18, for location based information 14, the request based, at least in part, on a current location 16 of the device 18;
receiving capability information 20 of the device 18 to autonomously perform at least one physical action;
determining, based at least in part on the received capability information 20 of the device 18 and/or environment 24 of the device 18, at least one dynamically created physical challenge 22 to be autonomously performed by the device 18;
cause to transmit the at least one dynamically created physical challenge 22 to the device 18; receiving sensor data 28 based, at least in part, on the at least one dynamically created physical challenge 22;
determining, based at least in part on the received sensor data 28, if the device 18 has successfully completed the at least one dynamically created physical challenge 22; and
if it is determined that the device 18 has successfully completed the at least one dynamically created physical challenge 22, cause to transmit the requested location based information 14 to the device 18.

It can be considered that block 318 comprises, from the point of view of the device 18, receiving, upon successful completion of the at least one dynamically created physical challenge 22, the requested location based information 14.

In some examples, it can be considered that block 318 comprises if it is determined that the device 18 is verified/authenticates as being at the location 16, cause to transmit the requested location based information 14 to the device 18.

Accordingly, in examples, the device 18 is only provided with the requested location based information 14 if it is confirmed that the device 18 is indeed at the reported current location 16.

In some examples, when the reported current location 16 of the device 18 has been confirmed, it can be considered a confirmed and/or determined current location 16 of the device 18.

In some examples, method 300 comprises transmitting appearance information 30 of the device 18 to the at least one server 12. The appearance information 30 can be transmitted from/by the device 18.

In examples, the appearance information 30 can be used in method 300. For example, the appearance information 30 can be used in determining if the device 18 has successfully completed the at least one dynamically generated physical challenge 22.

In some examples, method 300 comprises receiving appearance information 30 of the device 18, wherein determining if the device 18 has successfully completed the at least one dynamically created physical challenge 22 is based, at least in part, on the received appearance information 30 of the device 18.

Appearance information 30 of the device 18 can comprise any suitable information indicative of and/or descriptive of and/or providing information of the appearance of at least a portion of the device 18.

In examples, the appearance information 30 can comprise one or more images of the appearance of at least a portion of the device 18. In some examples, the appearance information 30 can comprise a three dimensional model of at least a portion of the device 18.

In examples, the appearance information 30 can, for example, be used to determine if a device 18 having an expected appearance successfully performs the at least one dynamically created physical challenge 22 at the reported current location 16 of the device 18.

In some examples, method 300 comprises if it is determined that the device 18 has not successfully completed the at least one dynamically created physical challenge, denying the device access to the requested location based information 16.

Accordingly, in examples, if the device 18 has not and/or cannot successfully complete the at least one dynamically created physical challenge 22 and therefore cannot prove that the device 18 is actually at the reported current location 16, the device 18 cannot access the location based information 14.

In some examples, method 300 comprises generating, using at least one camera of the device 18, at least one image of the environment 24 of the device 18 at the current location 16 of the device 18, and cause to transmit/transmitting the at least one image of the environment 24 of the device 18 to the at least one server 12 prior to receiving at least one dynamically created physical challenge 22.

In examples, any suitable image data can be used. For example, static image data and/or video image data.

Accordingly, from the point of view of the at least one server 12, method 300 can comprise receiving, from the device 18, prior to determining the at least one dynamically created physical challenge 22 at least one image of the environment 24 of the device 16, which can be considered at least one image of a reported environment 24 of the device 16.

This can provide proof that the device 18 has access to visual information of the respective physical location 16 as reported by the device 18.

In some examples, the at least one server 12 can determine if the image data indicates that the device 18 sees what is expected at the location 16.

Once the current location 16 of the device 18 has been verified/authenticated, the device 18 can be considered a trusted device 18 for the at least one server 12 and/or a device 18 known/confirmed to be at the location 16.

The device 18 can then be used as a further device 34 in relation to authentication/verification of another device 19 reporting to be at the location 16 and/or in the environment 24 of the location 16 and requesting location based information 14 from the at least one server 12.

In some examples, method 300 comprises determining, by the at least one server 12, that the device 18 has successfully completed the at least one dynamically created physical challenge 22, and subsequently cause and/or request the device 18 to perform at least one physical action 26. For example, the device 18 can observe/detect at least one physical action 26 of another device 19 and/or can perform at least one physical action to be observed and/or detected by another device 19.

From the point of view of the device 18, method 300 can, in some examples, comprise receiving, after successful completion of the at least one dynamically created physical challenge 22, one or more physical actions 26 to be performed by the device 18, and control and/or cause the device 18 to perform/performing the one or more physical actions 26.

For example, the device can observe/detect at least one physical action 26 of another device 19 and/or can perform at least one physical action 26 to be observed/detected by another device 19.

Accordingly, in examples, device 18 can operate as a further device 34 in method 30 being performed with respect to verification/authentication of reported location of another device 19.

Examples of the disclosure are advantageous and provide technical benefits.

For example, examples of the disclosure can prevent sensitive and/or confidential location based information, such as map information for automated operation around the location, being provided to unauthorized devices that are not actually physically at the location and/or are falsifying reported current location to access location based information.

In examples, this can prevent such information from being accessed by and/or altered by unauthorized devices and/or users.

This can provide increased security with regard to sensitive and/or confidential location based information.

For example, examples of the disclosure can prevent devices using prior knowledge of challenges to falsify sensor data to access location based information.

For example, examples of the disclosure provide for authentication of a device and subsequent use of the device as a trusted device in, for example, authentication/verification of another device.

For example, examples of the disclosure provide improved tracking of devices having the same/similar physical appearance. For example, in a warehouse having many identical robots, at least one server of the warehouse can cause a particular robot to perform a dynamically created physical challenge to correctly track the robot.

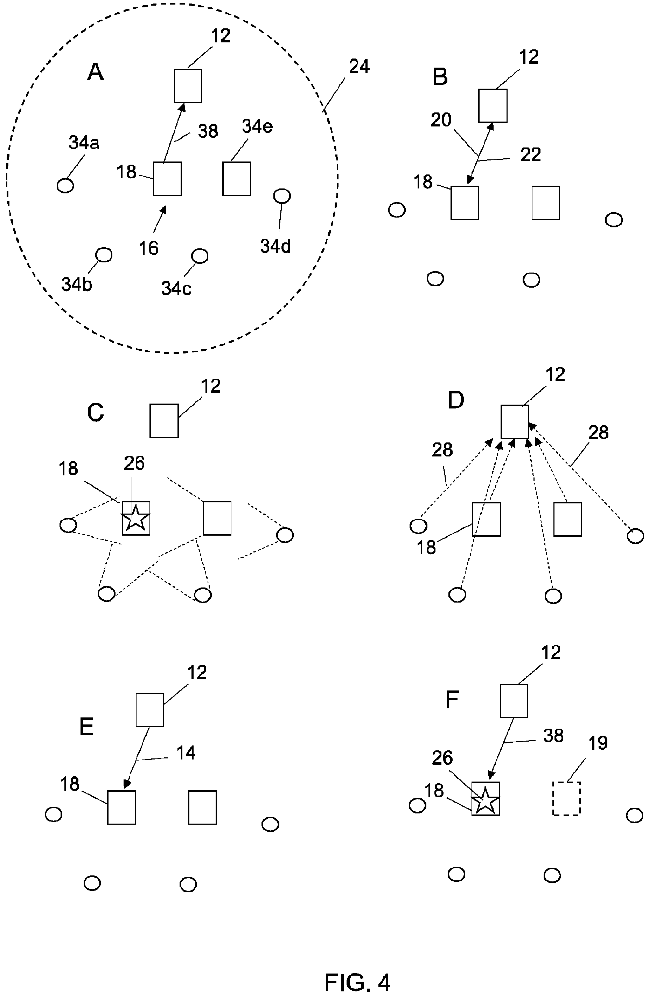

FIG. 4 illustrates an example scenario.

The example of FIG. 4 is split into 6 parts labelled A to F.

At part A, a device 18 is newly introduced into an environment 24 and needs access to location based information 14 to autonomously operate in the environment 24. For example, the device 18 requires map information of the environment 24 to be able to autonomously operate in the environment 24.

In the example of FIG. 4, the device 18 is an agent that is to autonomously operate in a work environment such as a factory or warehouse for example.

In part A, the device 18 transmits one or more signals 38 to at least one server 12 requesting the location based information 14. The device 18 also reports that it is currently at location 16 in the environment 24. At this point, the location 16 is considered a reported location.

Also in the environment 24 of the location 16 are five further devices 34a-e which are confirmed by the at least one server 12 to be in the environment 24 of the location 16.

The at least one server 12 can control actions of the further devices 34.

In the illustrated example, the further devices 34 comprise cameras. Further device 34a to d are cameras and further device 34e is an autonomous agent comprising a camera.

At part B, the device 18 provides capability information 20 to the at least one server 12 and the server determined at least one dynamically created physical challenge 22. The server transmits the at least one dynamically created physical challenge 22 to the device 18.

The at least one server 12 knows that the further devices 34 have cameras and that the device is configured for autonomous motion.

In the example of FIG. 4, the at least one dynamically created physical challenge indicates that the device 18 should autonomously perform a sequence of defined movements.

At part C, the device 18 performs at least one physical action, which in the example of FIG 4 comprises the defined sequence of autonomous movements.

The further device 34 observe the device 18 using their cameras as illustrated by the dashed lines in the illustrated example.

In the example of FIG. 4 the device 18 also records video data from a camera of the device 18 during performance of the autonomous movements.

At part D, the device 18 and further devices 34 transmit sensor data 28 to the at least one server 12. In the example of FIG. 4 the sensor data comprises video data of and from the device 18 during the autonomous movements.

At part E, the at least one server 12 determines that the device 18 has successfully completed the at least one dynamically created physical challenge 22 at the location 16 and therefore the reported location 16 of the device 18 is considered a verified/confirmed location 16.

The at least one server 12 transmits the requested location based information 14 to the device.

At part F, another device 19 has requested location based information from the at least one server 12 and the at least one server 12 has not yet confirmed the current location 16 of the device 18.

The at least one server transmits one or more signals 38 to the device 18 to cause/control the device to perform one or more physical actions 26 to be observed and/or detected by the another device 19 to verify/confirm the location of the another device 19.

In part F, the device 18 can therefore be considered a further/trusted device 34 to the at least one server 12.

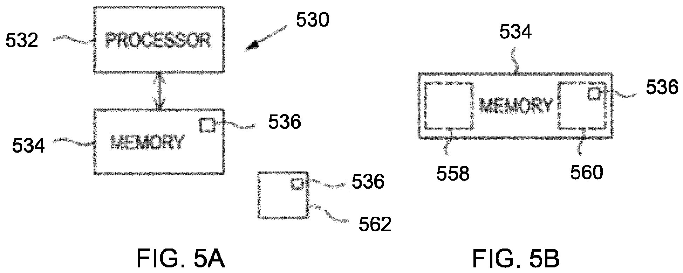

Fig 5A illustrates an example of a controller 530. The controller 530 can be used in an apparatus 10, such as apparatus 10a and/or 10b of FIG. 1 and/or Fig. 2. In some examples, controller 530 can be considered an apparatus 10.

Implementation of a controller 530 may be as controller circuitry. The controller 530 may be implemented in hardware alone, have certain aspects in software including firmware alone or can be a combination of hardware and software (including firmware).

As illustrated in Fig 5A the controller 530 may be implemented using instructions that enable hardware functionality, for example, by using executable instructions of a computer program 536 in a general-purpose or special-purpose processor 532 that may be stored on a computer readable storage medium (disk, memory etc) to be executed by such a processor 532.

The processor 532 is configured to read from and write to the memory 534. The processor 532 may also comprise an output interface via which data and/or commands are output by the processor 532 and an input interface via which data and/or commands are input to the processor 532.

The memory 534 stores a computer program 536 comprising computer program instructions (computer program code) that controls the operation of the apparatus when loaded into the processor 532. The computer program instructions, of the computer program 536, provide the logic and routines that enables the apparatus to perform the methods illustrated in FIG. 3 and/or 4. The processor 532 by reading the memory 534is able to load and execute the computer program 536.

The apparatus therefore comprises:
at least one processor 532; and
at least one memory 534 including computer program code
the at least one memory 534 and the computer program code configured to, with the at least one processor 532, cause the apparatus at least to perform:
   cause to request, from at least one server, location based information based, at least in part, on a current location of a device;
   cause to transmit, to the at least one server, capability information of the device to autonomously perform at least one physical action;
   receiving at least one dynamically created physical challenge to be autonomously performed by the device, the at least one dynamically created physical challenge based, at least in part, on the capability information of the device and/or one or more capabilities of environment of the device;
   controlling the device to autonomously perform at least one physical action based, at least in part, on the at least one dynamically created physical challenge.

The apparatus therefore comprises:
at least one processor 532; and
at least one memory 534 including computer program code
the at least one memory 534 and the computer program code configured to, with the at least one processor 532, cause the apparatus at least to perform:
   receiving a request, from a device, for location based information, the request based, at least in part, on a current location of the device;
   receiving capability information of the device to autonomously perform at least one physical action;
   determining, based at least in part on the received capability information of the device and/or one or more capabilities of environment of the device, at least one dynamically created physical challenge to be autonomously performed by the device;
   cause to transmit the at least one dynamically created physical challenge to the device;
   receiving sensor data based, at least in part, on the at least one dynamically created physical challenge;
   determining, based at least in part on the received sensor data, if the device has successfully completed the at least one dynamically created physical challenge; and
   if it is determined that the device has successfully completed the at least one dynamically created physical challenge, cause to transmit the requested location based information to the device.

As illustrated in Fig 5A, the computer program 536 may arrive at the apparatus via any suitable delivery mechanism 562. The delivery mechanism 562 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 536. The delivery mechanism may be a signal configured to reliably transfer the computer program 536. The apparatus may propagate or transmit the computer program 536 as a computer data signal.

Computer program instructions for causing an apparatus to perform at least the following or for performing at least the following:
cause to request, from at least one server, location based information based, at least in part, on a current location of a device;
cause to transmit, to the at least one server, capability information of the device to autonomously perform at least one physical action;
receiving at least one dynamically created physical challenge to be autonomously performed by the device, the at least one dynamically created physical challenge based, at least in part, on the capability information of the device and/or one or more capabilities of environment of the device;
controlling the device to autonomously perform at least one physical action based, at least in part, on the at least one dynamically created physical challenge.

Computer program instructions for causing an apparatus to perform at least the following or for performing at least the following:
receiving a request, from a device, for location based information, the request based, at least in part, on a current location of the device;
receiving capability information of the device to autonomously perform at least one physical action;
determining, based at least in part on the received capability information of the device and/or one or more capabilities of environment of the device, at least one dynamically created physical challenge to be autonomously performed by the device;
cause to transmit the at least one dynamically created physical challenge to the device;
receiving sensor data based, at least in part, on the at least one dynamically created physical challenge;
determining, based at least in part on the received sensor data, if the device has successfully completed the at least one dynamically created physical challenge; and
if it is determined that the device has successfully completed the at least one dynamically created physical challenge, cause to transmit the requested location based information to the device.

The computer program instructions may be comprised in a computer program, a non-transitory computer readable medium, a computer program product, a machine readable medium. In some but not necessarily all examples, the computer program instructions may be distributed over more than one computer program.

Although the memory 534 is illustrated as a single component/circuitry it may be implemented as one or more separate components/circuitry some or all of which may be integrated/removable and/or may provide permanent/semi-permanent/ dynamic/cached storage.

In examples, the memory 534 comprises a random-access memory 558 and a read only memory 560. In examples, the computer program 536 can be stored in the read only memory 560.

Although the processor 532 is illustrated as a single component/circuitry it may be implemented as one or more separate components/circuitry some or all of which may be integrated/removable. The processor 532 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in FIG. 3 and/or 4 may represent steps in a method and/or sections of code in the computer program 536. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

Thus, the apparatus can comprise means for:
cause to request, from at least one server, location based information based, at least in part, on a current location of a device;
cause to transmit, to the at least one server, capability information of the device to autonomously perform at least one physical action;
receiving at least one dynamically created physical challenge to be autonomously performed by the device, the at least one dynamically created physical challenge based, at least in part, on the capability information of the device and/or one or more capabilities of environment of the device;
controlling the device to autonomously perform at least one physical action based, at least in part, on the at least one dynamically created physical challenge.

Thus, the apparatus can comprise means for:
receiving a request, from a device, for location based information, the request based, at least in part, on a current location of the device;
receiving capability information of the device to autonomously perform at least one physical action;
determining, based at least in part on the received capability information of the device and/or one or more capabilities of environment of the device, at least one dynamically created physical challenge to be autonomously performed by the device;
cause to transmit the at least one dynamically created physical challenge to the device;
receiving sensor data based, at least in part, on the at least one dynamically created physical challenge;
determining, based at least in part on the received sensor data, if the device has successfully completed the at least one dynamically created physical challenge; and
if it is determined that the device has successfully completed the at least one dynamically created physical challenge, cause to transmit the requested location based information to the device.

In examples, an apparatus can comprise means for performing one or more methods, and/or at least part of one or more methods, as disclosed herein.

In examples, an apparatus can be configured to perform one or more methods, and/or at least part of one or more methods, as disclosed herein.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. A method comprising:
cause to request, from at least one server, location based information based, at least in part, on a current location of a device;
cause to transmit, to the at least one server, capability information of the device to autonomously perform at least one physical action;
receiving at least one dynamically created physical challenge to be autonomously performed by the device, the at least one dynamically created physical challenge based, at least in part, on the capability information of the device and/or one or more capabilities of environment of the device;
controlling the device to autonomously perform at least one physical action based, at least in part, on the at least one dynamically created physical challenge.

2. A method as claimed in claim 1, comprising:
cause to transmit, to the at least one server, sensor data of the device based, at least in part on the autonomously performed at least one physical action.

3. A method as claimed in claim 1 or 2, wherein the location based information comprises information to enable the device to autonomously move around the current location of the device.

4. A method as claimed in any of claims 1 to 3, wherein the at least one dynamically created physical challenge comprises at least one movement, and/or at least one sound, and/or at least one haptic output, and/or at least one display output, and/or at least one sensing action to be autonomously performed by the device.

5. A method as claimed in any of claims 1 to 4, comprising:
cause to transmit appearance information of the device to the at least one server.

6. A method as claimed in any of claims 1 to 5, comprising:
receiving, upon successful completion of the at least one dynamically created physical challenge, the requested location based information.

7. An apparatus comprising means for performing the method of any of claims 1 to 6.

8. A computer program comprising instructions, which, when executed by an apparatus, cause the apparatus to perform the method of any of claims 1 to 6.

9. A method comprising:
receiving a request, from a device, for location based information, the request based, at least in part, on a current location of the device;
receiving capability information of the device to autonomously perform at least one physical action;
determining, based at least in part on the received capability information of the device and/or one or more capabilities of environment of the device, at least one dynamically created physical challenge to be autonomously performed by the device;
cause to transmit the at least one dynamically created physical challenge to the device;
receiving sensor data based, at least in part, on the at least one dynamically created physical challenge;
determining, based at least in part on the received sensor data, if the device has successfully completed the at least one dynamically created physical challenge; and
if it is determined that the device has successfully completed the at least one dynamically created physical challenge, cause to transmit the requested location based information to the device.

10. A method as claimed in claim 9, wherein the sensor data is received from the device and/or from one or more further devices in the environment of the device.

11. A method as claimed in claim 9 or 10, wherein the location based information comprises information to enable the device to autonomously move around the current location of the device.

12. A method as claimed in any of claims 9 to 11, wherein the at least one dynamically created physical challenge comprises at least one movement, and/or at least one sound, and/or at least one haptic output, and/or at least one display output, and/or at least one sensing action to be autonomously performed by the device.

13. A method as claimed in any of claims 9 to 12, comprising:
receiving appearance information of the device, wherein determining if the device has successfully completed the at least one dynamically created physical challenge is based, at least in part, on the received appearance information of the device.

14. A method as claimed in any of claims 9 to 13, comprising:
cause one or more further devices in the environment of the device to perform at least one physical action based, at least in part, on the at least one dynamically created physical challenge.

15. An apparatus comprising means for performing the method of any of claims 9 to 14.

## Patentansprüche

1. Verfahren, das Folgendes umfasst:
Veranlassen des Anforderns von standortbasierten Informationen mindestens teilweise auf Basis eines aktuellen Standorts einer Vorrichtung bei mindestens einem Server;
Veranlassen des Übertragens von Fähigkeitsinformationen der Vorrichtung, mindestens eine physische Aktion autonom durchzuführen, zu dem mindestens einen Server;
Empfangen von mindestens einer dynamisch erstellten physischen Herausforderung, die von der Vorrichtung autonom durchzuführen ist, wobei die mindestens eine dynamisch erstellte physische Herausforderung mindestens teilweise auf den Fähigkeitsinformationen der Vorrichtung und/oder auf einer oder mehreren Fähigkeiten einer Umgebung der Vorrichtung basiert;
Steuern der Vorrichtung zum autonomen Durchführen von mindestens einer physischen Aktion mindestens teilweise auf Basis der mindestens einen dynamisch erstellten physischen Herausforderung.

2. Verfahren nach Anspruch 1, das Folgendes umfasst:
Veranlassen des Übertragens von Sensordaten der Vorrichtung mindestens teilweise auf Basis der autonom durchgeführten mindestens einen physischen Aktion zu dem mindestens einen Server.

3. Verfahren nach Anspruch 1 oder 2, wobei die standortbasierten Informationen Informationen umfassen, die es der Vorrichtung ermöglichen, sich um den aktuellen Standort der Vorrichtung autonom zu bewegen.

4. Verfahren nach einem der Ansprüche 1 bis 3, wobei die mindestens eine dynamisch erstellte physische Herausforderung mindestens das Durchführen von einer Bewegung und/oder mindestens einem Klang und/oder mindestens einer haptischen Ausgabe und/oder mindestens einer Anzeigeausgabe und/oder mindestens einer Erfassungsaktion durch die Vorrichtung umfasst.

5. Verfahren nach einem der Ansprüche 1 und 4, das Folgendes umfasst:
Veranlassen des Übertragens von Erscheinungsinformationen der Vorrichtung zu dem mindestens einen Server.

6. Verfahren nach einem der Ansprüche 1 und 5, das Folgendes umfasst:
Empfangen der angeforderten standortbasierten Informationen nach erfolgreichem Abschluss der mindestens einen dynamisch erstellten physischen Herausforderung.

7. Einrichtung, die Mittel zum Durchführen des Verfahrens nach einem der Ansprüche 1 bis 6 umfasst.

8. Computerprogramm, das Anweisungen umfasst, die, wenn sie von einer Einrichtung ausgeführt werden, die Einrichtung veranlassen, das Verfahren nach einem der Ansprüche 1 bis 6 durchzuführen.

9. Verfahren, das Folgendes umfasst:
Empfangen einer Anforderung von standortbasierten Informationen bei einer Vorrichtung, wobei die Anforderung mindestens teilweise auf einem aktuellen Standort der Vorrichtung basiert;
Empfangen von Fähigkeitsinformationen der Vorrichtung, mindestens eine physische Aktion autonom durchzuführen;
Bestimmen von mindestens einer dynamisch erstellten physischen Herausforderung, die von der Vorrichtung autonom durchzuführen ist, mindestens teilweise auf Basis der empfangenen Fähigkeitsinformationen der Vorrichtung und/oder einer oder mehreren Fähigkeiten einer Umgebung der Vorrichtung;
Veranlassen des Übertragens der mindestens einen dynamisch erstellten physischen Herausforderung zur Vorrichtung;
Empfangen von Sensordaten mindestens teilweise auf Basis der mindestens einen dynamisch erstellten physischen Herausforderung;
Bestimmen mindestens teilweise auf Basis der empfangenen Sensordaten, ob die Vorrichtung die mindestens eine dynamisch erstellte physische Herausforderung erfolgreich abgeschlossen hat; und
wenn bestimmt wird, dass die Vorrichtung mindestens eine dynamisch erstellte physische Herausforderung erfolgreich abgeschlossen hat, Veranlassen des Übertragens der angeforderten standortbasierten Informationen der Vorrichtung.

10. Verfahren nach Anspruch 9, wobei die Sensordaten von der Vorrichtung und/oder von einer oder mehreren weiteren Vorrichtungen in der Umgebung der Vorrichtung empfangen werden.

11. Verfahren nach Anspruch 9 oder 10, wobei die standortbasierten Informationen Informationen umfassen, die es der Vorrichtung ermöglichen, sich um den aktuellen Standort der Vorrichtung autonom zu bewegen.

12. Verfahren nach einem der Ansprüche 9 bis 11, wobei die mindestens eine dynamisch erstellte physische Herausforderung mindestens das Durchführen von einer Bewegung und/oder mindestens einem Klang und/oder mindestens einer haptischen Ausgabe und/oder mindestens einer Anzeigeausgabe und/oder mindestens einer Erfassungsaktion durch die Vorrichtung umfasst.

13. Verfahren nach einem der Ansprüche 9 und 12, das Folgendes umfasst:
Empfangen von Erscheinungsinformationen der Vorrichtung, wobei das Bestimmen, ob die Vorrichtung die mindestens eine dynamisch erstellte physische Herausforderung erfolgreich abgeschlossen hat, mindestens teilweise auf den empfangenen Erscheinungsinformationen der Vorrichtung basiert.

14. Verfahren nach einem der Ansprüche 9 und 13, das Folgendes umfasst:
Veranlassen von einer oder mehreren weiteren Vorrichtungen in der Umgebung der Vorrichtung, mindestens teilweise auf Basis der mindestens einen dynamisch erstellten physischen Herausforderung mindestens eine physische Aktion durchzuführen.

15. Einrichtung, die Mittel zum Durchführen des Verfahrens nach einem der Ansprüche 9 bis 14 umfasst.

## Revendications

1. Procédé comprenant les étapes suivantes :
provoquer la demande, par au moins un serveur, d'informations basées sur l'emplacement en se basant au moins en partie sur un emplacement actuel d'un dispositif ;
provoquer la transmission, à l'au moins un serveur, d'informations de capacité du dispositif pour effectuer de manière autonome au moins une action physique ;
recevoir au moins un défi physique créé dynamiquement à effectuer de manière autonome par le dispositif, l'au moins un défi physique créé dynamiquement étant basé au moins en partie sur les informations de capacité du dispositif et/ou sur une ou plusieurs capacités d'un environnement du dispositif ;
commander le dispositif pour effectuer de manière autonome au moins une action physique en se basant au moins en partie sur l'au moins un défi physique créé dynamiquement.

2. Procédé selon la revendication 1, comprenant l'étape suivante :
provoquer la transmission, à l'au moins un serveur, de données de capteur du dispositif en se basant au moins en partie sur l'au moins une action physique effectuée de manière autonome.

3. Procédé selon la revendication 1 ou 2, dans lequel les informations basées sur l'emplacement comprennent des informations permettant au dispositif de se déplacer de manière autonome autour de l'emplacement actuel du dispositif.

4. Procédé selon l'une des revendications 1 à 3, dans lequel l'au moins un défi physique créé dynamiquement comprend au moins un déplacement et/ou au moins un son et/ou au moins une sortie haptique et/ou au moins une sortie d'affichage et/ou au moins une action de détection à effectuer de manière autonome par le dispositif.

5. Procédé selon l'une des revendications 1 à 4, comprenant l'étape suivante :
provoquer la transmission d'informations d'apparence du dispositif à l'au moins un serveur.

6. Procédé selon l'une des revendications 1 à 5, comprenant l'étape suivante :
une fois l'au moins un défi physique créé dynamiquement réussi, recevoir les informations basées sur l'emplacement demandées.

7. Appareil comprenant des moyens pour effectuer le procédé selon l'une des revendications 1 à 6.

8. Programme informatique comprenant des instructions qui, lorsqu'elles sont exécutées par un appareil, amènent l'appareil à effectuer le procédé selon l'une des revendications 1 à 6.

9. Procédé comprenant les étapes suivantes :
recevoir d'un dispositif une demande d'informations basées sur l'emplacement, la demande étant basée au moins en partie sur un emplacement actuel du dispositif ;
recevoir des informations de capacité du dispositif pour effectuer de manière autonome au moins une action physique ;
en se basant au moins en partie sur les informations de capacité reçues du dispositif et/ou sur une ou plusieurs capacités d'un environnement du dispositif, déterminer au moins un défi physique créé dynamiquement à effectuer de manière autonome par le dispositif ;
provoquer la transmission de l'au moins un défi physique créé dynamiquement au dispositif ;
recevoir des données de capteur en se basant au moins en partie sur l'au moins un défi physique créé dynamiquement ;
en se basant au moins en partie sur les données de capteur reçues, déterminer si le dispositif a réussi à accomplir l'au moins un défi physique créé dynamiquement ; et
s'il est déterminé que le dispositif a réussi à accomplir l'au moins un défi physique créé dynamiquement, provoquer la transmission des informations basées sur l'emplacement demandées au dispositif.

10. Procédé selon la revendication 9, dans lequel les données de capteur sont reçues du dispositif et/ou d'un ou plusieurs dispositifs supplémentaires dans l'environnement du dispositif.

11. Procédé selon la revendication 9 ou 10, dans lequel les informations basées sur l'emplacement comprennent des informations permettant au dispositif de se déplacer de manière autonome autour de l'emplacement actuel du dispositif.

12. Procédé selon l'une des revendications 9 à 11, dans lequel l'au moins un défi physique créé dynamiquement comprend au moins un déplacement et/ou au moins un son et/ou au moins une sortie haptique et/ou au moins une sortie d'affichage et/ou au moins une action de détection à effectuer de manière autonome par le dispositif.

13. Procédé selon l'une des revendications 9 à 12, comprenant l'étape suivante :
recevoir des informations d'apparence du dispositif, dans lequel le fait de déterminer si le dispositif a réussi à accomplir l'au moins un défi physique créé dynamiquement est basé au moins en partie sur les informations d'apparence reçues du dispositif.

14. Procédé selon l'une des revendications 9 à 13, comprenant l'étape suivante :
amener un ou plusieurs dispositifs supplémentaires dans l'environnement du dispositif à effectuer au moins une action physique en se basant au moins en partie sur l'au moins un défi physique créé dynamiquement.

15. Appareil comprenant des moyens pour effectuer le procédé selon l'une des revendications 9 à 14.
